# EUROPEAN PATENT SPECIFICATION

(11) **EP 0 529 933 B1**
(45) Date of publication and mention of the grant of the patent: **13.05.1998**
(21) Application number: 92307587.3
(22) Date of filing: 19.08.1992
(51) Int. Cl.: G09G 3/36, G09G 3/18, G06F 3/147, G06F 5/01

(54) **Data stream altering system in a LCD driver**
Datenstrom-Veränderungssystem in einem Flüssigkristallanzeigesteuergerät
Système de modification d'un flux de données dans un contrôleur d'affichage à cristaux liquides

(30) Priority: 23.08.1991 US 749072
(43) Date of publication of application: 03.03.1993
(73) Proprietor: MOTOROLA, INC., Schaumburg, IL 60196 (US)
(72) Inventor: Wong, Harvey, Wong Tai Sin, Kowloon (HK)
(74) Representative: Hudson, Peter David

(56) References cited:
- EP-A- 0 055 676
- EP-A- 0 409 030
- FR-A- 2 165 976
- MOTOROLA TECHNICAL DEVELOPMENTS, vol. 6, no. 1, October 1986, Schaumburg IL, US, pp. 51-52; B. MOYER et al.: 'Barrel Shifter Control Mechanisms'

## Description

### Background of the Invention

This invention relates, in general, to a graphical support unit for liquid crystal displays (LCD).

Traditionally, good graphic support equated to complicated LCD controllers. As displayed graphics on LCD screens become more and more complex, conventional support devices increased in number. As graphics manipulation complexities increase the size of the graphics driving devices, the drain on stored power also increases. Power drain is an obvious problem when the LCD is part of a hand held electronics device driven by power stored in batteries. Furthermore, size of the LCD support devices must be carefully considered when designing hand-held units which are constantly decreasing in size.

An additional trend in the electronics market is increasing the speed of the device and increasing the device's capability. The capability of the device is often dependent upon the load on the micro-processing unit (MPU). If high speed support elements can perform many of the functions normally required of the MPU, the MPU will be freed up to perform more advanced functions.

EP-A-0 409 030 discloses a method of altering a string of data in a recirculating shift register of a LCD controller/driver circuit having cascaded segment drivers coupled to a row data serial interface which links the recirculating shift register and the drivers with a MPU. Display data input into the segment drivers may be altered by recirculating data through the other segment drivers to the row data serial interface, where the data is altered by inputs from the MPU.

EP-A-0 055 676 discloses a LCD circuit having a recirculating shift register having serial input and output terminals for receiving and generating binary data in bit serial format and a plurality of intermediate parallel output terminals for coupling display data to the LCD. Display data is loaded into the shift register during a display update mode and recirculated for display by the LCD during a data refresh mode.

However, in both these systems, the data is circulated through the shift register in one direction only, so that it must be output at the other end of the register from that at which it was input.

In "Motorola Technical Developments", Vol. 6, No. 1, October 1986, pages 51-52 published by Motorola, Inc. in Schaumburg, Illinois, USA, there is disclosed a processor which supports bitfield operations by using two pointers defining start and end positions for field insert and extract operations.

### Summary of the Invention

Accordingly, the present invention provides a Liquid Crystal Display (LCD) controller and driver circuit for a LCD having a plurality of display segments, the circuit comprising: a control circuit including a clock; a plurality of segment drivers coupled together in series to form a row of segment drivers, each segment driver being for coupling to a respective display segment of the LCD to drive the respective display segment; a row data serial interface circuit coupled between the row of segment drivers and the control circuit for providing an input to the segment driver at an end of the row of segment drivers and for receiving an output from a segment driver at an end of the row of segment drivers, characterised in that each segment driver comprises a bidirectional shift register, the row of segment drivers and the interface circuit providing a circular bidirectional data path for the display data such that display data is shiftable in a data string from one segment driver to the next segment driver in the row of segment drivers in either direction at the clock rate, wherein the control circuit includes a pointer register for storing a first pointer designating a beginning of a portion of the data string to be written and a second pointer designating an end of the portion of the data string to be written, the control circuit being arranged for controlling the interface circuit and the row of segment drivers such that new display data is written to the data string from the interface circuit when the first pointer indicates that the beginning of the portion of the data string has reached the interface circuit until the second pointer indicates that the end of the portion of the data string has reached the interface circuit, whereby the display data can be input to the row of segment drivers at either end of the row and can be output from the row of segment drivers at either end of the row to the interface circuit.

The above and other features and advantages of the present invention will be better understood from the following detailed description taken in conjunction with the accompanying drawings.

### Brief Description of the Drawing

Fig. 1 is a generalized schematic of a LCD driver and control unit according to the present invention.

Fig. 2 shows the schematic of Fig. 1 broken into components.

Fig. 3 shows the elements of the segment driver of Fig. 2.

Fig. 4 is a schematic of a LCD controller/driver with a split screen LCD according to the present invention.

Fig. 5 shows the data transfer between screens on a split screen LCD according to the present invention.

Fig. 6 is a schematic of the control circuit of Fig. 2 according to the present invention.

Fig. 7 is a schematic of a sequential write operation according to the present invention.

### Detailed Description

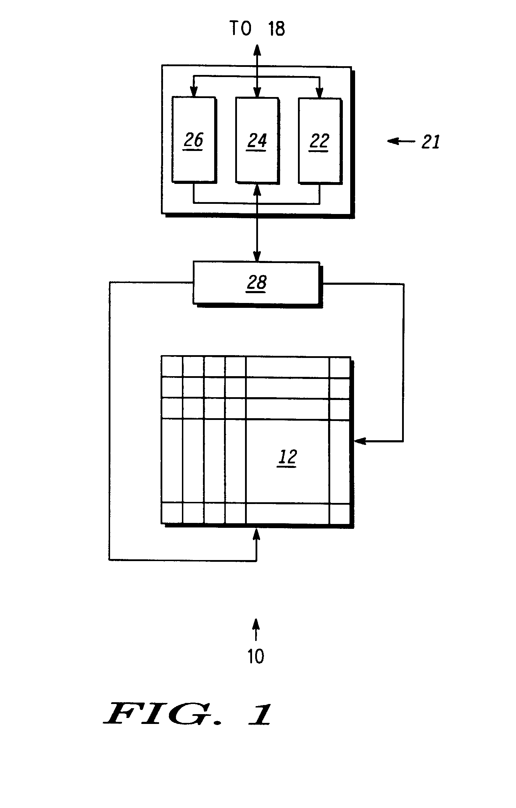

Fig. 1 shows a LCD controller/driver 10 coupled to a LCD 12. LCD controller/driver 10 comprises a segment control interface 22, a row data serial interface 24, a LCD timing generator 26, and LCD drivers 28. Segment control interface 22, row data serial interface 24, and LCD timing generator 26, which generates the timing signals, are shown as part of a micro-control unit (MCU) 21.

Control circuit 20 is coupled to to a micro-processing unit (MPU) 18 which is not shown but indicated by number in Fig. 1. Since controller/driver 10 is used for LCD graphic control, information is transferred back and forthbetween interfaces 22, 24, and 26 and MPU 18.

MPU 18 sends timing signals to LCD timing generator 26, and sends segment control signals to interface 22. Information may be transmitted both ways between MPU 18 and row data serial interface 24.

Information is relayed both ways between LCD drivers 28 and row data serial interface 24.

Row data serial interface 24 is a serial interface which supports high speed serial bits transfer among LCD drivers 28 and MPU 18, pointer functions, variable pitch selection, screen width definition, and other serial data handling functions. As will be further described later, row data serial interface 24 and cascaded segment drivers are connected to form a data ring where the data flow in the data ring is bi-directional. Rows, or portions thereof, of display data are transferred back and forth between MPU 18 and drivers 28 through row data serial interface 24. This transfer of information allows ready access to the data for updates or alterations. All data for display is transferred through row data serial interface 24.

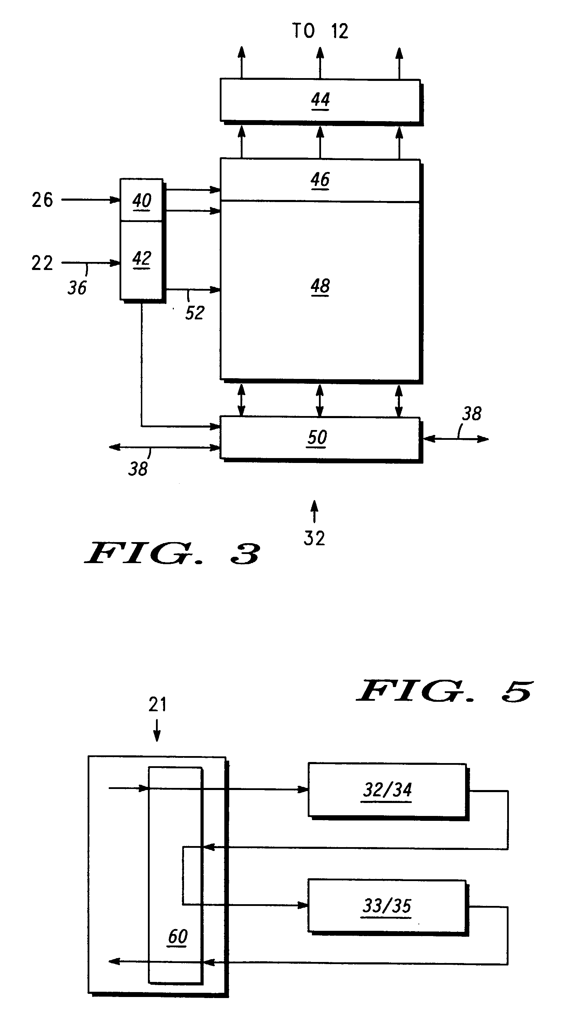

Segment control interface 22 supplies commands to drivers 28. The correlation between segment control interface 22 and row data serial interface 24 will be described later in conjunction with Fig. 3.

LCD timing generator 26 supplies timing signals for display synchronization among individual drivers of drivers 28.

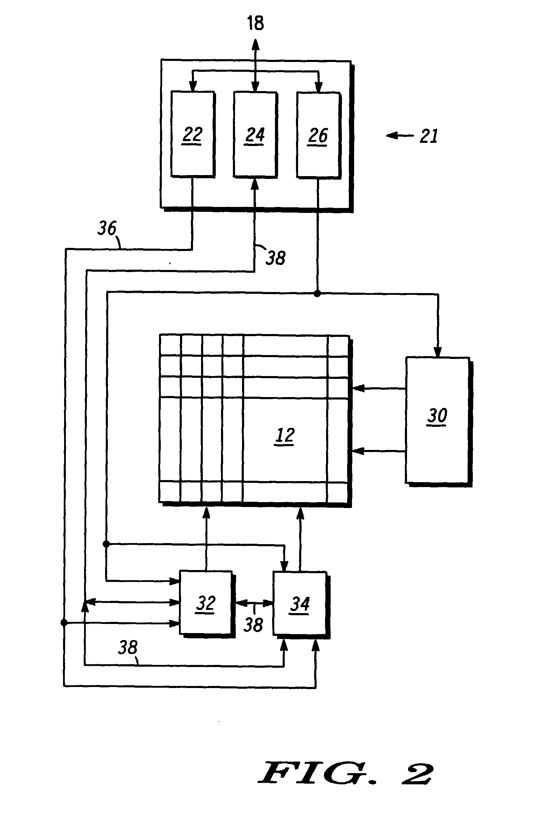

Fig. 2 shows the circuit of Fig. 1 having the elements of LCD drivers 28 broken out. LCD drivers 28 comprises backplane (or row) driver(s) 30 (shown as a single driver for description purposes in Fig. 2) and segment (or column) drivers 32 and 34. Although only two segment drivers are shown in Fig. 2, it should be understood that any number of segment drivers may be coupled in series similar to drivers 32 and 34, depending upon the width of LCD 12.

Backplane driver 30 is preferably a CMOS chip consisting of 80 high voltage LCD driving signals. Backplane driver 30 supports a multiplex ratio of 32 to 256. Backplane driver 30 can be cascaded in multiples to achieve a higher driver count than 65. One having skill in the art will recognize that backplane driver 30 is the vertical display control for LCD 12. Backplane driver 30 activates the row of LCD 12 into which a row of display data is to be displayed.

Backplane driver 30 is coupled to LCD timing generator 26.

Segment drivers 32 and 34 are both coupled to Segment control interface 22, LCD timing generator 26, and bi-directionally to row data serial interface 24. Furthermore, segment drivers 32 and 34 are coupled bi-directionally to each other.

The data ring mentioned in relation to Fig. 1 can be readily seen in Fig. 2. Display data is input from row data serial interface 24 to segment drivers 32 and 34 through a one-bit bi-directional serial line (38). Signal lines 36 from segment control interface 22 input control signals to segment drivers 32 and 34. The display data can be shifted from one segment driver to another, updated by MPU 18, or displayed on LCD 12.

Fig. 3 shows the elements of segment driver 32, as well as the relation between segment driver 32 and segment control interface 22 and the other elements of data ring 38.

Segment driver 32 generally comprises timing logic 40 coupled to LCD timing generator 26, control logic 42 coupled to segment control interface 22 via 8-bit bus lines 36, high voltage drivers array 44 coupled to LCD 12, display data latch array 46 coupled to timing logic 40 and high voltage drivers array 44, and random access memory (RAM) 48 coupled to display data latch array 46. RAM 48 is further coupled to timing logic 40, and to control logic 42. Segment driver 32 also comprises shift register 50 which is coupled to control logic 42, RAM 48, and linked within the data ring 38.

RAM 48 is N rows high by 160 bits wide. Similarly, shift register 50, display data latch array 46, and high voltage drivers array 44 are 160 bits wide. When two segment drivers are cascaded as with segment drivers 32 and 34, LCD 12 may be 320 bits wide. The present invention does not contemplate specifically limiting the number of cascaded segment drivers within the data ring to two. The limit of number of segment drivers is dependent upon the size of horizontal loop size register (described subsequently). The present embodiment, a 10-bit loop size, is used allowing up to six segment drivers to be cascaded.

Display data is received by shift register 50 from the data ring 38. Shift register 50 may input the display data into RAM 48 or shift it on through data ring 38. The transfer of the display data from shift register 50 to RAM 48, is controlled by the control signal from segment control interface 22 as indicated by line 52. As soon as display data in data ring 38 is in its designated position, MPU will direct all segment drivers, through control logic 42, to fetch the display data from shift register 50 to RAM 48.

The control signal from control logic 42 also governs the row of data shifted from RAM 48 to display data drivers array 46 in conjunction with timing signals from timing logic 40. Data latched in display data drivers array 46 will be clocked into high voltage drivers array 44, and subsequently displayed on LCD 12.

Just as the MPU can direct control logic 42 to fetch display data into RAM 48 of the segment drivers, the MPU can also direct control logic 42 to retrieve display data from RAM 48 into shift register 50. This brings display data back into the data ring. Display data which is retrieved into data ring 38 may be amended, replaced, or transferred to another screen.

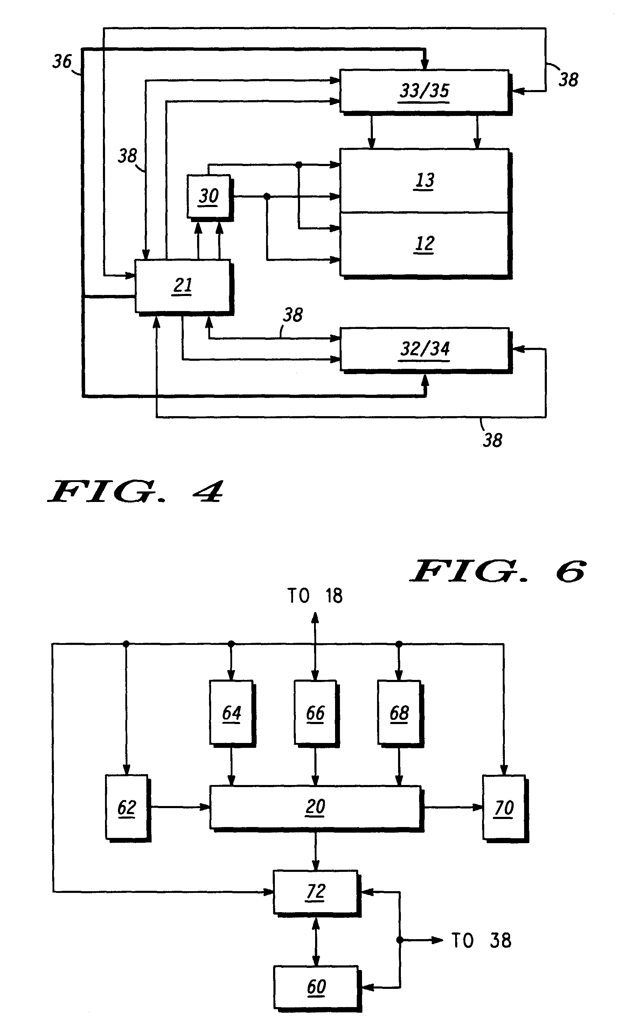

LCD controller/driver 10 may be coupled to a split panel LCD incorporating LCD 12 and 13 as shown in Fig. 4. Fig. 4 shows a split panel having LCDs 12 and 13 coupled to segment drivers 32/34 and 33/35 respectively. LCDs 12 and 13 are both coupled to backplane driver 30. Segment drivers 32/34 and 33/35 are coupled to MCU 21. In this embodiment, two loops make up the data ring. One loop operates with segment drivers 32 and 34, while the other loop operates with segment drivers 33 and 35. Generally, each loop operates independently of the other. However, both loops may be connected into a single data ring as shown in Fig. 5 by path switch and combinational logic (PCL) 60. Since data to be displayed is already stored in the RAM of the segment driver, if there is a means of transferring data between different banks of the segment driver, MPU 18's supervision can be kept at a minimum. MPU 18 can cause the data from the RAM of the segment drivers for one screen to be fetched into the data ring. MPU 18 then has PCL 60 couple the loops for upper and lower screens together and the data is transferred directly from the segment drivers of one screen to the segment drivers of the other screen. Although Fig. 5 shows a unidirectional data flow, it should be recognized that the data ring is bi-directional, or the data can be transferred both ways. Further, data can be injected into the bit stream as the data is being transferred from one screen to the other. This method of transferring data from screen to screen is faster than conventional methods and reduces the burden on the MPU.

The control of display information is understood by referencing Fig. 6. A control circuit 20 is coupled to a horizontal loop size register 62, a horizontal pointer register 64, a horizontal pitch register 66, a mode and attribute register 68, and a status register 70. Control circuit 20 receives signals from all registers except status register 70 where control circuit 20 inputs status signals to status register 70 Control circuit 20 outputs to parallel to serial converter 72. Information from parallel to serial converter 72 is output either directly to data ring 38, or to PCL 60. From PCL 60, information is output to data ring 38. Transfer of information between parallel to serial converter 72, PCL 60, and data ring 38 is bi-directional.

Parallel to serial converter 72 is coupled directly to MPU 18 to receive display data. Similarly, horizontal loop size register 62, horizontal pointer register 64, horizontal pitch register 66, mode and attribute register 68, and status register 70 are all coupled directly to MPU 18.

Horizontal loop size register 62 stores the value representing the number of bits of the cascaded shift registers in data ring 38. The value should be (Sn X Sb) - 1 where Sn is the number of shifter registers cascaded together, and Sb is the width of the shift registers in bits. For segment drivers 32 and 34, the value would be (2 X 160 )- 1 since the numbering begins with zero. Horizontal loop size register 62 controls the number shift clocks per operation.

Horizontal pointer register 64 latches two horizontal pointers which make up a boundary within the (Sn X Sb) - 1 loop. The pointers are called left and right pointers, but the pointers are interchangeable. The pointers define the area within the entire loop wherein MPU 18 will alter, amend, or replace display data. Display data within the data stream in data ring 38 that is not bounded by the two pointers ( data within the pointers termed active region and data without termed inactive region) will remain unchanged by MPU 18.

Horizontal pitch register 66 dictates the width of string of bits that will be altered by MPU 18 within the active region of the entire data stream.

Mode and attribute register 68 directs the type of operation; that is whether the operation will be a sequential write or sequential read operation, as well as one-shot insert or replace. Mode and attribute register 68 also directs the attributes of the display screen. In other words, mode and attribute register 68 directs the type of background (white on black or black on white), controls superposition, highlights, etc.

Status register 70 contains the current status of row data serial interface 24, and registers several flags. A first flag, if set, indicates the data ring is currently halt data shifting and MPU 18 can access the shift registers. The second flag, if set, shows the current bit is within the active region. A third flag is set when an overflow has happened in horizontal pitch register 66. A fourth flag, when clear, indicates there is no operation currently carried out by row data serial interface 24.

Display data in RAM 48 is altered or replaced as follows.MPU 18 sets left and right pointers by writing values into horizontal pointer register 64. These register values are continuously compared with the number of bits shifted. Once the bit position marked by a pointer reaches the parallel to serial converter 72, PCL 60 changes paths accordingly to include the parallel to serial converter 72 into the loop. The loop does not stop after the number of cycles specified by horizontal pitch register 66 is reached. If a sequential operation (i.e. sequential read or sequential write) is selected, the loop will stop for MPU 18 access. If a one-shot replace is selected, the loop will not stop, only PCL 60 will switch paths to exclude the parallel to serial converter 72 from the loop. If a one-shot insert is selected, the loop will continue to advance and parallel to serial converter 72 will continue in the loop. Once the bit position marked by another pointer reaches parallel to serial converter 72, parallel to serial converter 72 will be excluded from the loop. Loop advance will stop since the bits marked by pointers will have returned to their original positions.

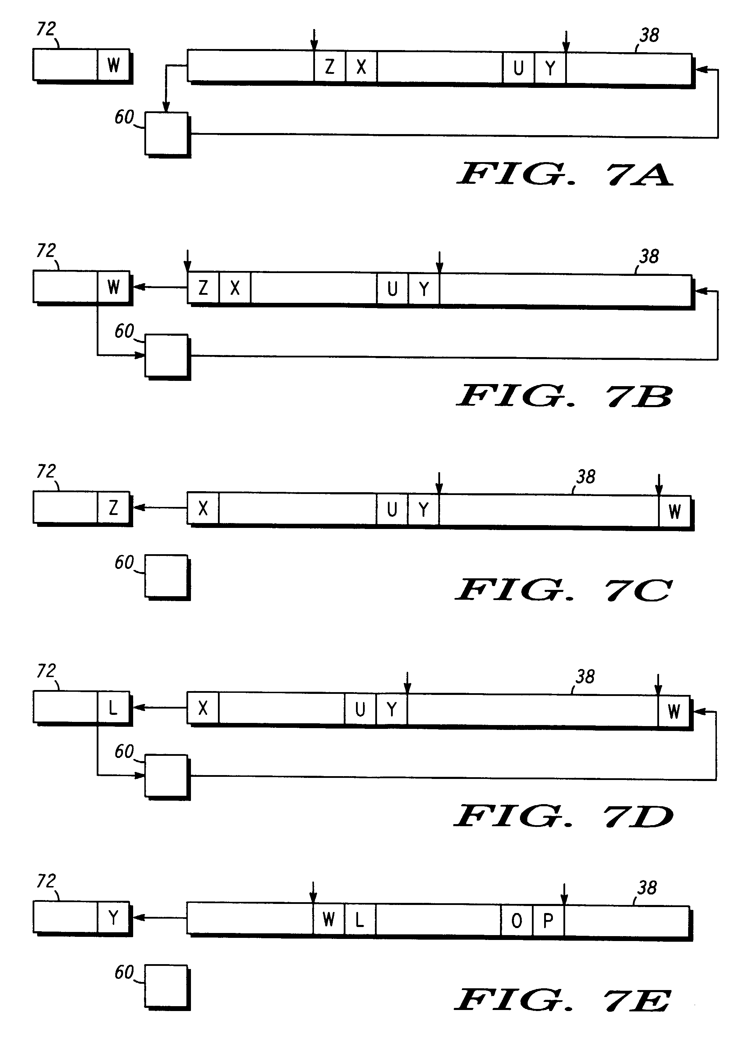

To explain a sequential operation in detail, Fig. 7 shows a graphical representation of a sequential write operation. In a), the data stream of one loop is shifted around through PCL 60. Further, the active region is defined by the left and right pointers as latched in horizontal pointer register 64. New information which will replace the display data in the active region is latched in parallel to serial converter 72. When the location of the left pointer reaches parallel to serial converter 72 (b), the link from the data ring 38 to PCL 60 is terminated and information within data ring 38 is connected directly to parallel to serial converter 72. Parallel to serial converter 72 is then coupled to PCL 60. In c), the location of the left pointer has been wrapped around through PCL 60 and the new information (W) has replaced the old (Z). At this time, the flow of data ring 38 halts to allow MPU 18 to write new information to parallel to serial converter 72. The procedure continues (d) until all the display data in the active region is altered as required and the active region returns to its original shift register 50 (e). A control signal then directs control logic 42 to fetch the altered display data from shift register 50 to RAM 48.

The pointers mentioned above are not limited to the system described. The pointers may be used with any system where serial write and serial read operations are performed on a data stream.

The above described LCD controller/driver 10 facilitates quick and easy alterations of rows of display data within segment drivers. Further, the pointers readily define the active region and facilitate quick and efficient data stream alteration.

Although the invention has been described in conjunction with specific embodiments thereof, it is evident that many alternatives, modifications, and variations will be apparent to those skilled in the art in the light of the foregoing description.

## Claims

1. A Liquid Crystal Display (LCD) controller and driver circuit (10) for a LCD (12) having a plurality of display segments, the circuit comprising:
a control circuit (18, 20) including a clock;
a plurality of segment drivers (32, 34) coupled together in series to form a row of segment drivers, each segment driver (32, 34) being for coupling to a respective display segment of the LCD (12) to drive the respective display segment;
a row data serial interface circuit (24) coupled between the row of segment drivers and the control circuit (18) for providing an input to the segment driver at an end of the row of segment drivers and for receiving an output from a segment driver at an end of the row of segment drivers,
characterised in that each segment driver (32, 34) comprises a bidirectional shift register, the row of segment drivers (32, 34) and the interface circuit (24) providing a circular bidirectional data path for the display data such that display data is shiftable in a data string from one segment driver to the next segment driver in the row of segment drivers in either direction at the clock rate, wherein
the control circuit (18,20) includes a pointer register (64) for storing a first pointer designating a beginning of a portion of the data string to be written and a second pointer designating an end of the portion of the data string to be written, the control circuit (18,20) being arranged for controlling the interface circuit (24) and the row of segment drivers such that new display data is written to the data string from the interface circuit (24) when the first pointer indicates that the beginning of the portion of the data string has reached the interface circuit until the second pointer indicates that the end of the portion of the data string has reached the interface circuit,
whereby the display data can be input to the row of segment drivers at either end of the row and can be output from the row of segment drivers at either end of the row to the interface circuit (24).

2. A LCD controller and driver circuit according to claim 1, wherein the LCD comprises a split panel display having a pair of screens (12, 13), each screen having a plurality of display segments and the LCD controller and driver circuit (10) further comprises a pair of rows of segment drivers (32, 34 and 33, 35), each row being associated with a respective screen and comprising a plurality of segment drivers coupled together in series, each segment driver being for coupling to a respective display segment of the respective screen to drive the respective display segment, wherein each row is coupled to the row data serial interface circuit (24) via the segment driver at each end of the row whereby the two rows of segment drivers and the interface circuit (24) provide two independent circular bidirectional data paths for the display data.

3. A LCD controller and driver circuit according to claim 2, further comprising a path switch (60) coupled between the two rows of segment drivers (32, 34 and 33, 35) and to the control circuit (24) whereby the control circuit (24) controls the path switch (60) to selectively combine the two independent circular bidirectional data paths into a single bidirectional circular data path.

## Patentansprüche

1. Flüssigkristallanzeige (LCD)-Controller und -Treiberschaltung (10) für eine LCD (12) mit einer Vielzahl von Anzeigesegmenten, wobei die Schaltung aufweist:
eine Steuerschaltung (18, 20) mit einem Taktgeber;
eine Vielzahl von Segmenttreibern (32, 34), welche miteinander in Reihe verbunden sind, um eine Zeile von Segmenttreibern zu bilden, wobei jeder Segmenttreiber (32, 34) zur Verbindung mit einem jeweiligen Anzeigesegment der LCD (12) zum Ansteuern des jeweiligen Anzeigeelements dient;
eine Zeilendaten-Reihenschnittschaltung (24), welche zwischen die Zeile von Segmenttreibern und die Steuerschaltung (18) geschaltet ist, zum Liefern einer Eingabe für den Segmenttreiber an einem Ende der Zeile von Segmenttreibern und zum Empfangen einer Ausgabe von einem Segmenttreiber an einem Ende der Zeile von Segmenttreibern;
dadurch gekennzeichnet, daß
jeder Segmenttreiber (32, 34) ein bidirektionales Schieberegister aufweist, wobei die Zeile von Segmenttreibern (32, 34) und die Schnittstellenschaltung (24) einen kreisförmigen bidirektionalen Datenweg für die Anzeigedaten schaffen, so daß die Anzeigedaten in einer Datenkette von einem Segmenttreiber zum nächsten Segmenttreiber in der Zeile von Segmenttreibern in jeder Richtung unter der Taktrate verschiebbar sind, wobei
die Steuerschaltung (18, 20) ein Zeigerregister (64) zum Speichern eines ersten Zeigers zum Bezeichnen eines Beginns eines Abschnitts der zu schreibenden Datenkette und einen zweiten Zeiger zum Bezeichnen eines Endes des Abschnitts der zu schreibenden Datenkette aufweist, wobei die Steuerschaltung (18, 20) derart gestaltet ist, daß sie die Schnittstellenschaltung (24) und die Zeile von Segmenttreibern derart steuert, daß neue Anzeigedaten in die Datenkette von der Schnittstellenschaltung (24) geschrieben werden, wenn der erste Zeiger anzeigt, daß der Beginn des Abschnitts der Datenkette die Schnittstellenschaltung erreicht hat, bis der zweite Zeiger anzeigt, daß das Ende des Abschnitts der Datenkette die Schnittstellenschaltung erreicht hat,
wodurch die Anzeigedaten in die Zeile von Segmenttreibern an jedem Ende der Reihe eingegeben werden können und von der Zeile von Segmenttreibern an jedem Ende der Zeile an die Schnittstellenschaltung (24) ausgegeben werden können.

2. LCD-Controller- und -Treiberschaltung nach Anspruch 1, wobei die LCD eine Spaltschirmanzeige mit einem Paar von Schirmen (12, 13) aufweist, wobei jeder Schirm eine Vielzahl von Anzeigesegmenten aufweist und die LCD-Controller- und -Treiberschaltung (10) weiterhin ein Paar von Zeilensegmenttreibern (32, 34 und 33, 35) aufweist, wobei jede Zeile einem jeweiligen Schirm zugeordnet ist und eine Vielzahl von Segmenttreibern, die miteinander in Reihe geschaltet sind, aufweist, wobei jeder Segmenttreiber zur Verbindung mit einem jeweiligen Anzeigesegment des jeweiligen Schirms zum Ansteuern des jeweiligen Anzeigesegments dient, wobei jede Zeile mit der Zeilendaten-Reihenschnittstellenschaltung (24) über den Segmenttreiber an jedem Ende der Reihe verbunden ist, wodurch die zwei Zeilen von Segmenttreibern und die Schnittstellenschaltung (24) zwei unabhängig kreisförmige bidirektionale Datenwege für die Anzeigedaten bilden.

3. LCD-Controller- und -Treiberschaltung nach Anspruch 2, gekennzeichnet durch einen Wegschalter (60), der zwischen die zwei Zeilen von Segmenttreibern (32, 34 und 33, 35) und die Steuerschaltung (24) geschaltet ist, wodurch die Steuerschaltung (24) den Wegschalter (60) zum selektiven Kombinieren der zwei unabhängigen kreisförmigen Datenwege in einen einzelnen bidirektionalen kreisförmigen Datenweg steuert.

## Revendications

1. Circuit de commande et d'excitation (10) de dispositif d'affichage à cristal liquide, ou LCD, destiné à un LCD (12) possédant une pluralité de segments d'affichage, le circuit comprenant :
- un circuit de commande (18, 20) comportant une horloge ;
- une pluralité de dispositifs d'excitation de segments (32, 34) couplés ensemble en série afin de former une rangée de dispositifs d'excitation de segments, chaque dispositif d'excitation de segment (32, 34) étant destiné à être couplé à un segment d'affichage respectif du LCD (12) afin d'exciter le segment d'affichage respectif;
- un circuit d'interface série de données de rangée (24) couplé entre la rangée de dispositifs d'excitation de segments et le circuit de commande (18) afin de fournir un signal d'entrée au dispositif d'excitation de segment se trouvant à une extrémité de la rangée de dispositifs d'excitation de segments et de recevoir un signal de sortie de la part d'un dispositif d'excitation de segment se trouvant à une extrémité de la rangée de dispositifs d'excitation de segments ;
caractérisé en ce que chaque dispositif d'excitation de segment (32, 34) comprend un registre à décalage bidirectionnel, la rangée de dispositifs d'excitation de segments (32, 34) et le circuit d'interface (24) fournissant un trajet de données bidirectionnel circulaire pour les données d'affichage de façon que les données d'affichage puissent être décalées, dans un anneau de données, d'un dispositif d'excitation de segment au dispositif d'excitation de segment suivant de la rangée de dispositifs d'excitation de segments dans l'un ou l'autre sens au rythme d'horloge, où
- le circuit de commande (18, 20) comporte un registre de pointeur (64) servant à stocker un premier pointeur désignant le commencement d'une partie de l'anneau de données à écrire et un deuxième pointeur désignant la fin de la partie de l'anneau de données à écrire, le circuit de commande (18, 20) étant conçu pour commander le circuit d'interface (24) et la rangée de dispositifs d'excitation de segments de façon que des nouvelles données d'affichage soient écrites dans l'anneau de données en provenance du circuit d'interface (24) lorsque le premier pointeur indique que le début de la partie de l'anneau de données a atteint le circuit d'interface jusqu'à ce que le deuxième pointeur indique que la fin de la partie de l'anneau de données a atteint le circuit d'interface,
- de sorte que les données d'affichage peuvent être appliquées en entrée à la rangée de dispositifs d'excitation de segments à l'une ou l'autre extrémité de la rangée et peuvent être délivrées depuis la rangée de dispositifs d'excitation de segments, à l'une ou l'autre extrémité de la rangée, au circuit d'interface (24).

2. Circuit de commande et d'excitation de LCD selon la revendication 1, où le LCD comprend un dispositif d'affichage à panneau découpé possédant une paire d'écrans (12, 13), chaque écran ayant une pluralité de segments d'affichage, et le circuit de commande et d'excitation de LCD (10) comprend en outre une paire de rangées de dispositifs d'excitation de segments (32, 34 et 33, 35), chaque rangée étant associée un écran respectif et comprenant une pluralité de dispositifs d'excitation de segments couplés ensemble en série, chaque dispositif d'excitation de segment étant destiné à être couplé à un segment d'affichage respectif de l'écran respectif afin d'exciter le segment d'affichage respectif, où chaque rangée est couplée au circuit d'interface série de données de rangées (24) via le dispositif d'excitation de segment à chaque extrémité de la rangée, de sorte que les deux rangées de dispositifs d'excitation de segments et le circuit d'interface (24) fournissent deux trajets de données bidirectionnels circulaires indépendants pour les données d'affichage.

3. Circuit de commande et d'excitation de LCD selon la revendication 2, comprenant en outre un commutateur de trajet (60) couplé entre les deux rangées de dispositifs d'excitation de segments (32, 34 et 33, 35) et au circuit de commande (24), si bien que le circuit de commande (24) commande le commutateur de trajet (60) de façon qu'il combine sélectivement les deux trajets de données bidirectionnels circulaires indépendants en un unique trajet de données circulaire bidirectionnel.
